# EUROPEAN PATENT APPLICATION

(11) **EP 2 390 619 A1**
(43) Date of publication of application: **30.11.2011**
(21) Application number: 11167882.7
(22) Date of filing: 27.05.2011
(51) Int. Cl.: G01B 7/02, G01D 9/00, G05B 23/02

(54) **Gap-measuring apparatus and method**

(30) Priority: 31.05.2010 IT CO20100030
(71) Applicant: Nuovo Pignone S.p.A., 50127 Florence (IT)
(72) Inventor: Giaccherini, Stefano, 52027 Tuscany (IT); Cassisi, Andrea, 52027 Tuscany (IT)
(74) Representative: Illingworth-Law, William Illingworth

(57) **Abstract**

Method and gap analyzer device configured to determine a gap in a turbo-machine. The gap analyzer device includes a housing configured to receive a rechargeable battery; a voltage multiplier unit configured to increase a voltage of the rechargeable battery to a predetermined value; a voltage stabilization unit configured to stabilize the voltage having the predetermined value; an output port configured to output the voltage having the predetermined value to a probe; an input port configured to receive from the probe a signal indicative of the gap of the turbo-machine; a processor unit configured to determine a voltage associated with the signal; a display configured to display the determined voltage; a common port connected to the voltage stabilization unit, the voltage multiplier unit and the display; and a switch electrically connected between the processor unit and the battery for switching on and off the gap analyzer device.

## Description

### BACKGROUND

### TECHNICAL FIELD

Embodiments of the subject matter disclosed herein generally relate to methods and systems and, more particularly, to mechanisms and techniques for measuring a gap.

### DISCUSSION OF THE BACKGROUND

A proximity sensor is a device that is capable of measuring a gap (distance) between the sensor and a target. Proximity sensors may be installed on various turbo-machines for determining, for example, vibrations in the machines. It is known that the turbo-machines, e.g., compressors, expanders, gas turbines, pumps, etc., have a shaft that rotate relative to a casing. Due to various factors, the rotation of the shaft is not perfect, and torsional vibrations may appear in the shaft. Torsional vibrations, if not controlled, may damage the shaft or reduce the lifetime of the shaft.

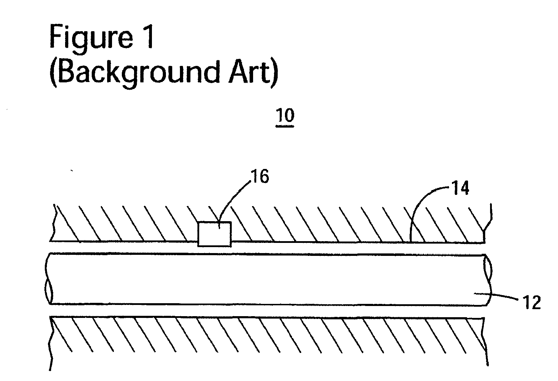

Thus, the operators of the turbo-machines are interested to monitor these torsional vibrations that might appear in the shaft. One way to monitor these vibrations is to place a proximity sensor close to the shaft. Such a sensor may determine the torsional vibrations of the shaft if there is an unobstructed path between the sensor and the shaft. Figure 1 is a schematic diagram of a turbo-machine 10 having a shaft 12 that rotates relative to a casing 14. A proximity sensor 16 is fixed to the casing for monitoring a rotation of the shaft 12.

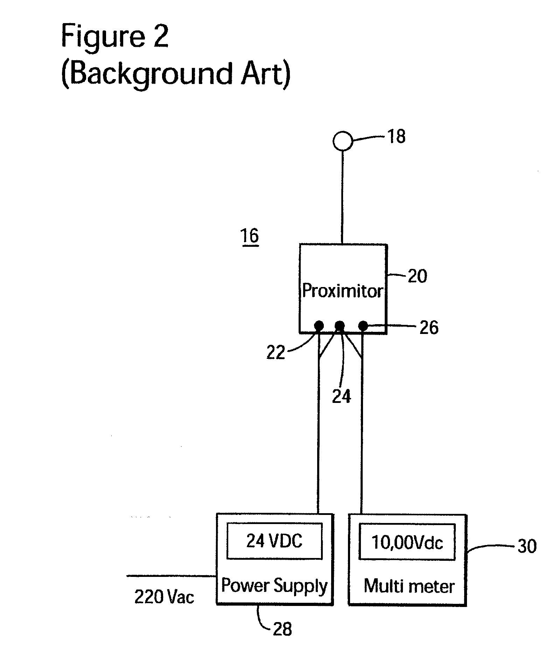

Figure 2 shows the sensor 16 in more details. A probe 18 (Bentley Nevada probe for example) may be attached to a proximitor 20. Proximitor 20 may be an interface and may include two or three input/output ports. Those skilled in the art would recognize that proximitor 20 may include various circuitries. Traditionally, the proximitor 20 has an input port 22, a common port 24 that is used as input and output, and an output port 26. A power supply unit 28 is connected to the input port 22 and common port 24 for supplying a 24 V direct current (dc) voltage. The power supply unit 28 may be connected to a 220 V alternating current (ac) source (not shown). Based on the input 24 V dc voltage, probe 18 measures, for example, a change in its impedance due to a rotation of the shaft.

A multimeter 30 that is connected to common port 24 and output port 26 is configured to measure the change in the probe's impedance and translate that change into a distance that corresponds to the distance between the shaft and the probe 18. In this way, the operator of the turbo-machine is able to monitor the vibrations that might appear in the shaft.

However, such an approach is time consuming and exposes the operator to high currents (from the 220 V source), which may result in safety issues and down production time. In addition, such an approach uses a multimeter 30 that has many other functions. Thus, the operator of the machine needs to remember complex settings for making the multimeter display the gap. Accordingly, it would be desirable to provide systems and methods that avoid the afore-described problems and drawbacks.

### SUMMARY

According to one exemplary embodiment, there is a gap analyzer device configured to determine a gap in a turbo-machine. The gap analyzer device includes a housing configured to receive a rechargeable battery; a voltage multiplier unit configured to be electrically connected to the rechargeable battery and to increase a voltage of the rechargeable battery to a predetermined value; a voltage stabilization unit connected to the voltage multiplier unit and configured to stabilize the voltage having the predetermined value; an output port connected to the voltage stabilization unit and configured to output the voltage having the predetermined value to a probe; an input port configured to receive from the probe a signal indicative of the gap of the turbo-machine; a processor unit electrically connected to the input port and configured to determine a voltage associated with the signal; a display connected to the processor unit and configured to display the determined voltage; a common port connected to the voltage stabilization unit, the voltage multiplier unit and the display; and a switch electrically connected between the processor unit and the battery for switching on and off the gap analyzer device. According to another exemplary embodiment, there is a gap analyzer device configured to determine a gap in a turbo-machine. The gap analyzer device includes a casing; a housing formed inside the casing and configured to receive a rechargeable battery; a voltage multiplier unit provided inside the casing and configured to be connected to the rechargeable battery and to increase a voltage of the rechargeable battery to a predetermined value; a voltage stabilization unit provided inside the casing and connected to the voltage multiplier unit and configured to stabilize the voltage having the predetermined value; an output port attached to the casing and connected to the voltage stabilization unit and configured to output the voltage having the predetermined value to a probe; an input port attached to the casing and configured to receive from the probe a signal indicative of the gap of the turbo-machine; a processor unit provided inside the casing and connected to the input port and configured to determine a voltage associated with the signal; a display attached to the casing and connected to the processor unit and configured to display the determined voltage; a common port attached to the casing and connected to the voltage stabilization unit, the voltage multiplier unit and the processor unit; a first switch electrically connecting the output port to the rechargeable battery and configured to be directly pressed by a user, the first switch being provided on an outside of the casing; a second switch electrically connecting the display to another battery and configured to be directly pressed by the user, the second switch being provided on the outside of the casing; and a third switch electrically connecting the rechargeable battery to the processing unit for testing the rechargeable battery and configured to be directly pressed by the user, the third switch being provided on the outside of the casing. According to still another exemplary embodiment, there is a gap analyzer device configured to determine a gap in a turbo-machine. The gap analyzer device includes a casing; a voltage multiplier unit configured to be connected to a rechargeable battery and to increase a voltage of the rechargeable battery to a predetermined value; a voltage stabilization unit connected to the voltage multiplier unit and configured to stabilize the voltage having the predetermined value; an output port connected to the voltage stabilization unit and configured to output the voltage having the predetermined value; an input port configured to receive a signal indicative of the gap of the turbo-machine; a processor unit connected to the input port and configured to calculate a voltage associated with the signal; a display connected to the processor unit and configured to display only the calculated voltage; a common port connected to the voltage stabilization unit, the voltage multiplier unit and the processor unit; a first switch electrically connecting the output port to the rechargeable battery and configured to be directly pressed by a user, the first switch being provided on an outside of the casing; a second switch electrically connecting the display to another battery and configured to be directly pressed by the user, the second switch being provided on the outside of the casing; a third switch electrically connecting the rechargeable battery to a processor for testing the rechargeable battery and configured to be directly pressed by the user, the third switch being provided on the outside of the casing; a first visual indicator provided on the outside of the casing and configured to light when the replacement battery is discharged; and a second visual indicator provided on the outside of the casing and configured to light when the replacement battery is charged.

According to still another exemplary embodiment, there is a method for measuring with a gap analyzer device a gap in a turbo-machine. The method includes a step of pressing a first switch to turn on the gap analyzer device; a step of pressing a second switch to determine whether a light indicator indicates that a rechargeable battery is operational; a step of contacting output and input ports of the gap analyzer device to a probe; a step of pressing a third switch on the gap analyzer device for sending a voltage to the probe and for receiving from the probe a signal indicative of the gap; and a step of displaying on a display of the gap analyzer device a voltage associated with the gap.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a part of a turbo-machine;
Figure 2 is a schematic diagram of a power supply connected to a probe and a proximitor for measuring a gap of a turbo-machine;
Figure 3 is a schematic diagram of a gap analyzer device according to an exemplary embodiment;
Figure 4 is a schematic diagram of a structure of a gap analyzer device according to an exemplary embodiment;
Figure 5 is a schematic diagram of components of a gap analyzer device according to an exemplary embodiment;
Figure 6 is an overview of a gap analyzer device according to an exemplary embodiment;
Figure 7 is a flow chart of a method for measuring a gap according to an exemplary embodiment;
Figure 8 is a flow chart illustrating a method for using a gap analyzing device according to an exemplary embodiment;
Figure 9 is a schematic diagram of components of another gap analyzer device according to an exemplary embodiment; and
Figure 10 is an overview of a gap analyzer device according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a machine having a rotating shaft. However, the embodiments to be discussed next are not limited to these systems, but may be applied to other systems that need a proximity sensor.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, a gap analyzer device includes fewer components then the existing devices for measuring a gap. In one application, the gap analyzer device includes only a housing configured to receive a rechargeable battery, a voltage multiplier unit configured to be connected to the rechargeable battery and to increase a voltage of the rechargeable battery to a predetermined value, a voltage stabilization unit connected to the voltage multiplier unit and configured to stabilize the voltage having the predetermined value, an output port connected to the voltage stabilization unit and configured to output the voltage having the predetermined value, an input port configured to receive a signal indicative of the gap of the turbo-machine processor unit connected to the input port and configured to calculate a voltage associated with the signal, a display connected to the processor unit and configured to display the calculated voltage, and a common port connected to the voltage stabilization unit, the voltage multiplier unit and the processor unit.

According to this exemplary embodiment, no other substantial components are included in the gap analyzer device. Still, in another embodiment, the gap analyzer device is configured to determine only a voltage indicative of the gap. In yet another exemplary embodiment, the gap analyzer device is configured to display only the voltage indicative of the gap or a length of the gap and no other quantities. It is noted that the exemplary embodiments describe a simple to use and simple to manufacture gap analyzer device. Thus it is undesirable to add more features to the gap analyzer device as the traditional gap analyzing devices have proved to be difficult to understand, use and build. For example, the novel gap analyzer device does not include a frequency measurement circuit, or a reference magnetic strip circuit, a PCMCIA data buffer, etc. An example of a data collector and analyzer device that is highly complex, and cumbersome to use is configured to detect plural quantities, as described by U.S. Patent No. 6,789,030, the entire disclosure of which is incorporated herein by reference.

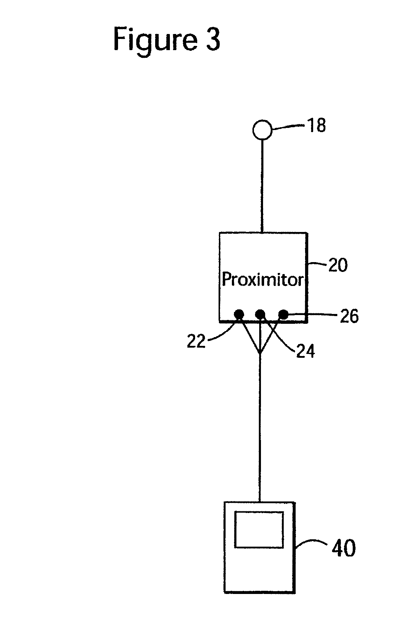

According to an exemplary embodiment, a novel gap analyzer device 40 is shown in Figure 3. It is noted that the same probe 18 and proximitor 20 from Figure 2 are illustrated in Figure 3. However, there is no power supply unit 28. The novel gap analyzer device 40 acts as the power supply and also as the analyzer of the data received from the proximitor 20.

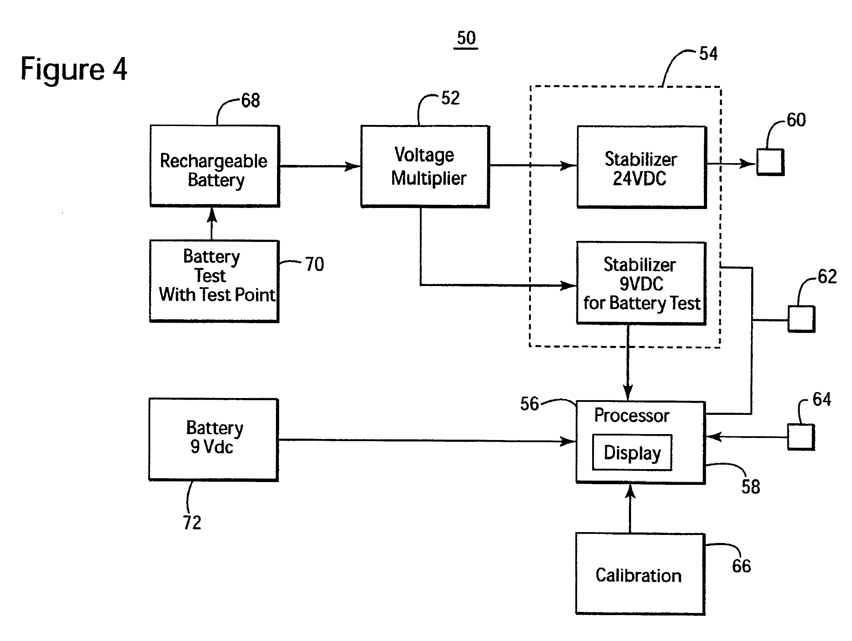

A schematic view of a gap analyzer device 50 is shown, according to an exemplary embodiment, in Figure 4. The gap analyzer device 50 includes a voltage multiplier unit 52, a voltage stabilization unit 54, a processor unit 56, and a display 58. The gap analyzer device 50 may also include an output port 60, a common port 62 and an input port 64. Essentially, the above noted components are the only components of the gap analyzer device 50 according to this exemplary embodiment. Thus, it can be seen that the structure of the novel gap analyzer device is simple and the usage of the device is also simple as will be explained later. According to another exemplary embodiment, the gap analyzer device may include a calibration unit 66.

The voltage multiplier unit 52 may be connected to a rechargeable battery 68. The rechargeable battery 68 may be accommodated by a housing in the gap analyzer device 50. The rechargeable battery 68 may provide a 9 V direct current voltage. The gap analyzer device 50 may include a circuit 70 for testing the amount of energy left in the battery 68. Another battery 72 may be connected to the processor 56 and/or display 58. Thus, the processor 56 and/or display 58 may be powered independent of the other units in the gap analyzer device 50.

According to an exemplary embodiment, the gap analyzer device 50 includes only the components shown in Figure 4 and the processor 56 is configured to only calculate a voltage associated with a gap between the probe 18 (see Figure 3) and a shaft 12 (see Figure 1) of the turbo-machine.

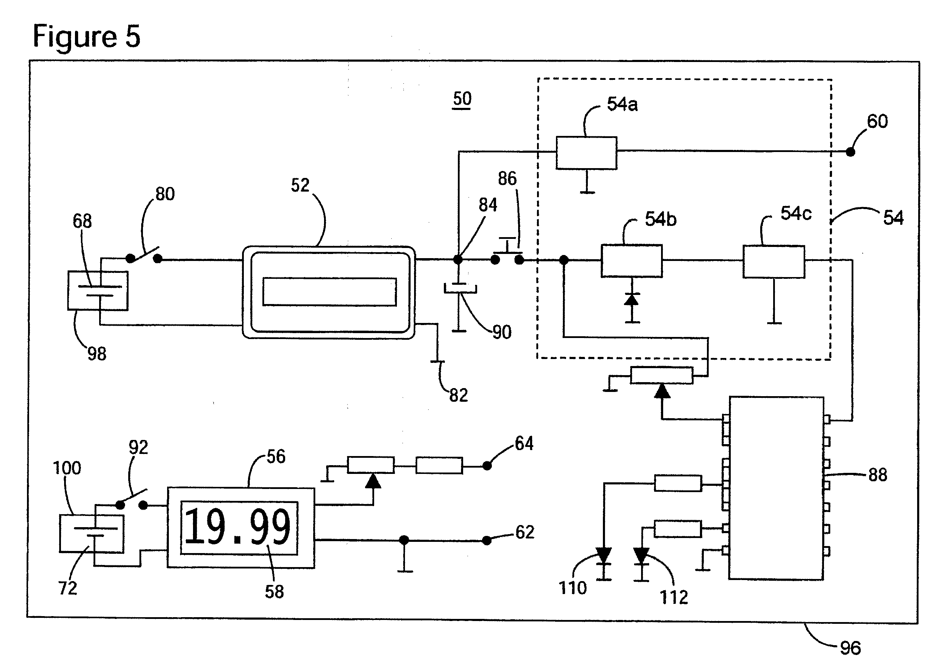

According to an exemplary embodiment illustrated in Figure 5, a structure of the gap analyzer device 50 is shown in more details. A 9 V rechargeable battery 68 is connected via a switch 80 to the voltage multiplier unit 52. The voltage multiplier unit 52 may include a transformer, e.g., a voltage transformer. The transformer may change the input voltage to a predetermined voltage, for example, 30 V dc. In another application, the predetermined voltage may take any value between 9 V and 30 V. An output terminal of the voltage multiplier unit 52 is connected to ground 82 while another output terminal is connected to a node 83.

The voltage stabilization unit 54 described with regard to Figure 4 may include a first voltage stabilization device 54a connected between the node 83 and the output port 60. The voltage stabilization unit 54 also includes second and third voltage stabilization devices 54b and 54c. Example of voltage stabilization devices are 78L05, 7824 and these elements are known to provide a stable voltage output even when the voltage input is not fixed. The second and third voltage stabilization units 54b and c are connected between a switch 86 and a microprocessor 88. The second and third voltage stabilization units are activated only when the switch 86 is closed and they serve to test the rechargeable battery, e.g., to achieve the functionality described by block 70 in Figure 4.

Various resistors and diodes are shown in Figure 5 connected to the microprocessor 88. For example, light diodes or equivalent devices are connected to processor 88 and these elements are configured to show an optimal level of a voltage of the battery (e.g., green led) and an insufficient level of the voltage (e.g., red led). In one application, a single device may be used to indicate both the optimal level and the insufficient level. The resistors between the diodes and the microprocessor in Figure 5 are able to regulate the activation of the respective diodes. A capacitor 90 may be connected between node 83 and ground for stabilizing the voltage between the ground and the multiplier 52.

Processor 56 is connected via a switch 92 to battery 72. Processor 56 is also connected to common port 62 and input port 64. Input port 64 is configured to be connected to probe 18 and to receive a signal indicative of a gap between the probe and the shaft of the turbo-machine. Based on the received signal, the processor 56 determines a voltage associated with the gap and sends instructions to the display 58 to display the determined voltage, e.g. 19.99 in Figure 5. In one application, the processor 56 is configured (wired) to do only this determination and no other operation. In another application, the processor may determine a gap distance and instruct the display 58 to display that distance.

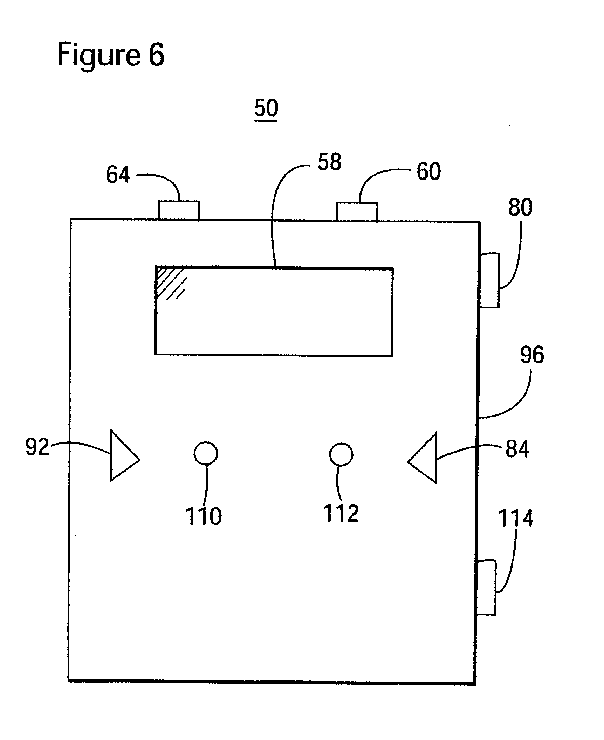

All elements shown in Figure 5 may be provided in a single casing 96. Thus, the gap analyzing device 50 may include a housing 98 for the rechargeable battery 68 and a housing 100 for the battery 72. The entire gap analyzing device 50 may be portable. The gap analyzing device 50 may have a design as illustrated in Figure 6. Display 58 is attached to casing 96. Ports 60 and 64 may be provided on top of the casing 96 or on the sides. In one application, port 60 includes the output port and the common port and port 64 includes the input port and the common port. Switch 92 (that switches on or off the device) may be placed to sandwich with switch 84 (battery test switch) two LED indicators 110 and 112. For example, LED indicator 110 may be red when the rechargeable battery 68 is not loaded and LED indicator 112 may be green when the battery is in optimal condition. Less or more LEDs may be used to indicate the charging state of the rechargeable battery 68. Switch 80 may be placed on a side of casing 96 to activate sending the voltage signal to the output port 60. Optionally, a power port 114 may be placed on the casing 96 for charging one or both of batteries 68 and 72. In one application, the power port 114 may be used for supplying the voltage to output port 60 and for powering the various units inside the gap analyzer device 50.

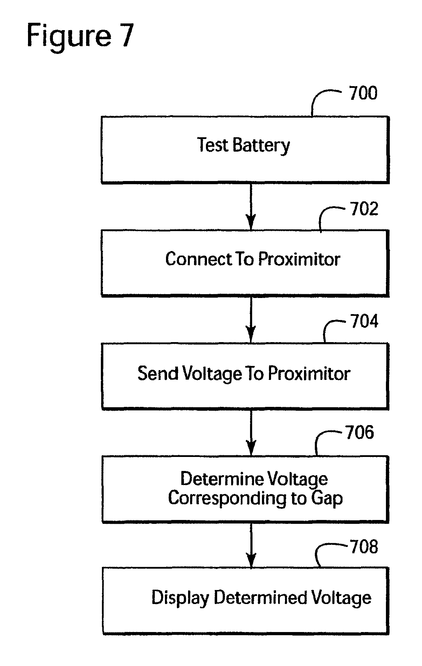

Next, the utilization of the gap analyzing device 50 is discussed with regard to Figure 7. In optional step 700, the operator closes switch 86 for testing the rechargeable battery 68. Although this step is not mandatory, performing this step ensures that the measurement of the gap is accurate. In step 702, the gap power analyzer 50 is connected with appropriate leads to the proximitor 20 (see Figure 3). In step 704, switch 80 is closed to connect the rechargeable battery 68 to the voltage multiplier unit 52. A voltage signal is sent to the output port 60 and then to the probe 18.

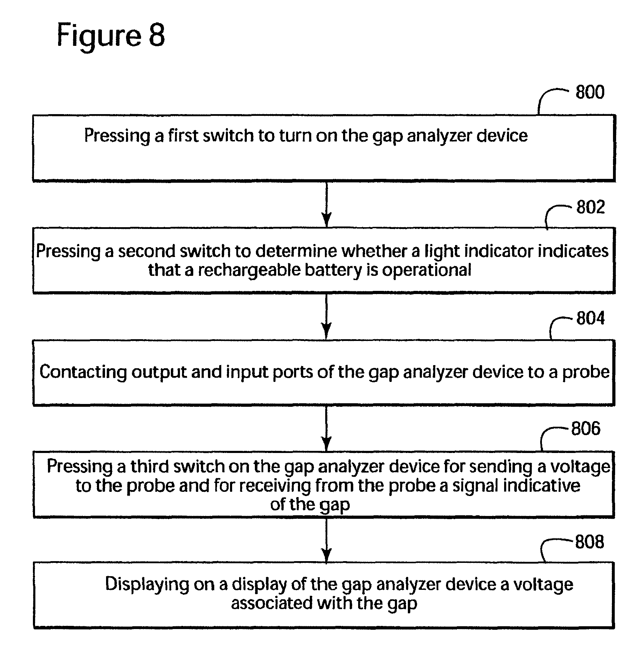

After the probe 18 performs the measurement of the gap, a signal is provided to the input port 64 and to the processor 56. Thus, in step 706 a voltage is determined in the processor 56 and this voltage corresponds to the measured gap. In step 708, display 58 displays the determined voltage under instructions from the processor 56. Therefore, the operator of the gap analyzer device 50 does not have to memorize any settings for using the device, does not have to press multiple buttons as in the existent devices, does not have to handle two different devices (power source and multimeter) and also does not have to work with a power source that includes high voltages (220 V) that may result in injuries. According to an exemplary embodiment illustrated in Figure 8, there is a method for measuring with a gap analyzer device a gap in a turbo-machine. The method includes a step 800 of pressing a first switch to turn on the gap analyzer device, a step 802 of pressing a second switch to determine whether a light indicator indicates that a rechargeable battery is operational, a step 804 of contacting output and input ports of the gap analyzer device to a probe, a step 806 of pressing a third switch on the gap analyzer device for sending a voltage to the probe and for receiving a signal indicative of the gap, and a step 808 of displaying on a display of the gap analyzer device a voltage associated with the gap. In one application, the method includes only the above noted steps.

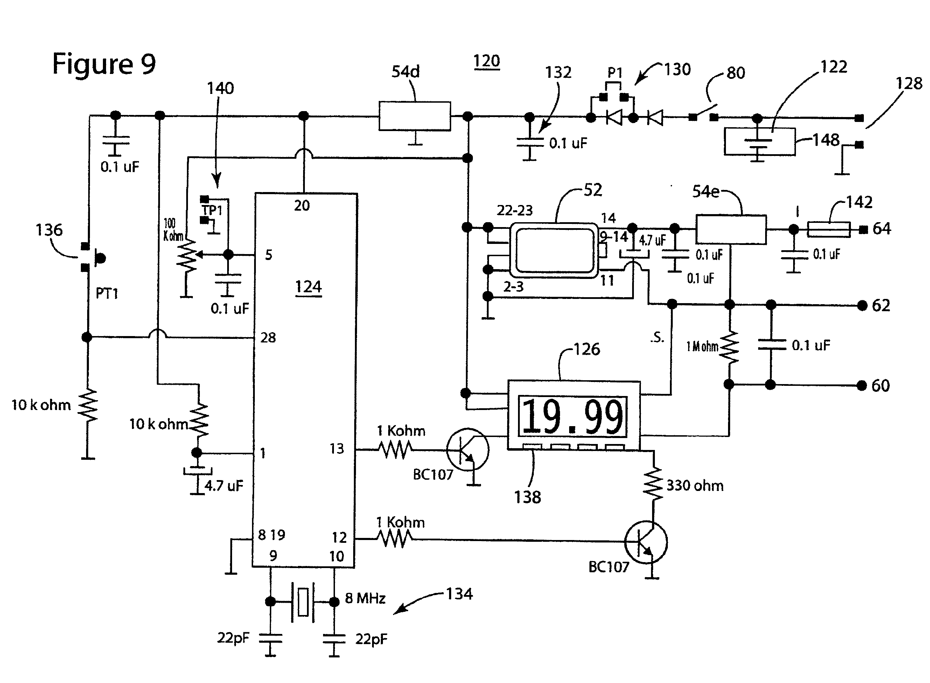

According to another exemplary embodiment illustrated in Figure 9, a gap analyzer 120 may have one battery 122 instead of two as shown in the embodiment of Figure 5. Battery 122 is used for generating the signal to be sent to the probe, to fed a microprocessor 124 and various associated electronics, and to activate display 126. The battery 122 is a DC battery having, for example, a 12 v output. The battery may be connected to an optional charging port 128 and via a switch 80 to electronics of the gap analyzer 120. Switch 80 is configured to switch on and off the gap analyzer device 120. In this respect, it is noted that once switch 80 turn on the gap analyzer device, a user of the device needs only to connect the device to the probe and the device automatically reads a value of the gap, e.g., no further button pushing is necessary. Rectifiers 130 and diode 132 may be provided between the battery 122 and a voltage stabilization device 54d.

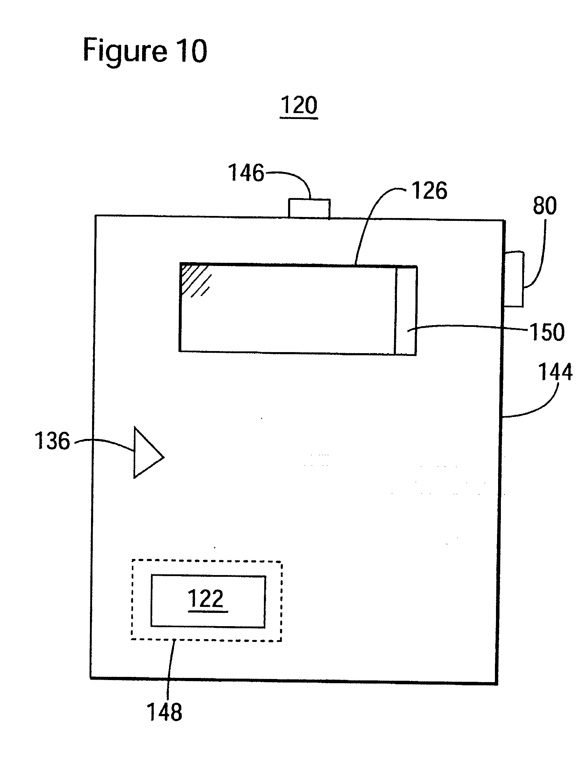

Voltage from battery 122 is provided to microprocessor 124, which has associated electronics for protection and for providing other desired functions. For example, circuit 134 may be a digital clock for providing the time, and switch 136 may activate an illumination system 138 associated with display 126. Voltage multiplier unit 52 may be similar to that of Figure 5 and another voltage stabilization device 54e may be similar to device 54a in Figure 5. A fuse 142 may be provided at input 64 to protect the electronics from a current higher than, for example, 200 mA. The embodiment shown in Figure 9 may have the display 126 integrated with a charge indicator controlled by microprocessor 124. In other words, display 126 may show in a certain area a symbol of a battery and the amount of energy left in the battery instead of having an indicator on the casing of the gap analyzer. In addition, the gap analyzer that uses the electrical diagram shown in Figure 9 may be designed to have a single physical connector 146 (see Figure 10) that houses the output port 60, common port 62, and the input port 64. Thus, according to this exemplary embodiment, a single battery is used instead of two batteries, a single connector is used for all three ports, the display has an integrated charge indicator controlled by the microprocessor, and there is a switch to illuminate the display. Figure 10 shows an external view of the gap analyzer 120. It is noted a casing 144 that holds display 126 and connector 146. Connector 14 may include ports 60, 62, and 64. A housing 148 is configured to hold the only battery 122 of the device. Display 126 may have a dedicated area 150 for showing a state of the battery 122. An on/off switch 80, similar to the embodiment shown in Figure 6, may be placed on casing 144. However, it is noted the absence of switch 84 for testing the battery as the microprocessor 124 may automatically perform this test. It is also noted the absence of LEDs 110 and 112 as their role is performed by area 150 of the display 126.

The disclosed exemplary embodiments provide a system and a method for measuring in a simple fashion a gap in a turbo-machine. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A gap analyzer device configured to determine a gap in a turbo-machine, the gap analyzer device comprising:
a housing configured to receive a rechargeable battery;
a voltage multiplier unit configured to be electrically connected to the rechargeable battery and to increase a voltage of the rechargeable battery to a predetermined value;
a voltage stabilization unit connected to the voltage multiplier unit and configured to stabilize the voltage having the predetermined value;
an output port connected to the voltage stabilization unit and configured to output the voltage having the predetermined value to a probe;
an input port configured to receive from the probe a signal indicative of the gap of the turbo-machine;
a processor unit electrically connected to the input port and configured to determine a voltage associated with the signal;
a display connected to the processor unit and configured to display the determined voltage;
a common port connected to the voltage stabilization unit, the voltage multiplier unit and the display; and
a switch electrically connected between the processor unit and the battery for switching on and off the gap analyzer device.

2. A gap analyzer device configured to determine a gap in a turbo-machine, the gap analyzer device comprising:
a casing;
a housing formed inside the casing and configured to receive a rechargeable battery;
a voltage multiplier unit provided inside the casing and configured to be connected to the rechargeable battery and to increase a voltage of the rechargeable battery to a predetermined value;
a voltage stabilization unit provided inside the casing and connected to the voltage multiplier unit and configured to stabilize the voltage having the predetermined value;
an output port attached to the casing and connected to the voltage stabilization unit and configured to output the voltage having the predetermined value to a probe;
an input port attached to the casing and configured to receive from the probe a signal indicative of the gap of the turbo-machine;
a processor unit provided inside the casing and connected to the input port and configured to determine a voltage associated with the signal;
a display attached to the casing and connected to the processor unit and configured to display the determined voltage;
a common port attached to the casing and connected to the voltage stabilization unit, the voltage multiplier unit and the processor unit;
a first switch electrically connecting the output port to the rechargeable battery and configured to be directly pressed by a user, the first switch being provided on an outside of the casing;
a second switch electrically connecting the display to another battery and configured to be directly pressed by the user, the second switch being provided on the outside of the casing; and
a third switch electrically connecting the rechargeable battery to the processing unit for testing the rechargeable battery and configured to be directly pressed by the user, the third switch being provided on the outside of the casing.

3. The gap analyzer device of Claim 1 or Claim 2, wherein the voltage of the rechargeable battery is 9 V direct current.

4. The gap analyzer device of any preceding Claim, wherein the predetermined value of the voltage of the voltage multiplier unit is between 24 V and 30 V direct current.

5. The gap analyzer device of any preceding Claim, wherein the voltage multiplier unit includes a voltage transformer.

6. The gap analyzer device of any preceding Claim, wherein the stabilization unit comprises:
a first stabilizer provided between the voltage multiplier unit and the output port;
a microprocessor; and
a second stabilizer provided between the voltage multiplier unit and the microprocessor.

7. The gap analyzer device of any preceding Claim, further comprising:
a battery connected to the display and configured to supply a direct current voltage to the display.

8. The gap analyzer device of any preceding Claim, wherein the processor unit is configured to calculate only a voltage corresponding to the gap or a length of the gap but no other quantities.

9. A gap analyzer device configured to determine a gap in a turbo-machine, the gap analyzer device comprising:
a casing;
a voltage multiplier unit configured to be connected to a rechargeable battery and to increase a voltage of the rechargeable battery to a predetermined value;
a voltage stabilization unit connected to the voltage multiplier unit and configured to stabilize the voltage having the predetermined value;
an output port connected to the voltage stabilization unit and configured to output the voltage having the predetermined value;
an input port configured to receive a signal indicative of the gap of the turbo-machine;
a processor unit connected to the input port and configured to calculate a voltage associated with the signal;
a display connected to the processor unit and configured to display only the calculated voltage;
a common port connected to the voltage stabilization unit, the voltage multiplier unit and the processor unit;
a first switch electrically connecting the output port to the rechargeable battery and configured to be directly pressed by a user, the first switch being provided on an outside of the casing;
a second switch electrically connecting the display to another battery and configured to be directly pressed by the user, the second switch being provided on the outside of the casing;
a third switch electrically connecting the rechargeable battery to a processor for testing the rechargeable battery and configured to be directly pressed by the user, the third switch being provided on the outside of the casing;
a first visual indicator provided on the outside of the casing and configured to light when the replacement battery is discharged; and
a second visual indicator provided on the outside of the casing and configured to light when the replacement battery is charged.

10. The gap analyzer device of any preceding Claim, consisting essentially of:
a housing configured to receive a rechargeable battery;
a voltage multiplier unit configured to be electrically connected to the rechargeable battery and to increase a voltage of the rechargeable battery to a predetermined value;
a voltage stabilization unit connected to the voltage multiplier unit and configured to stabilize the voltage having the predetermined value;
an output port connected to the voltage stabilization unit and configured to output the voltage having the predetermined value to a probe;
an input port configured to receive from the probe a signal indicative of the gap of the turbo-machine;
a processor unit electrically connected to the input port and configured to determine a voltage associated with the signal;
a display connected to the processor unit and configured to display the determined voltage;
a common port connected to the voltage stabilization unit, the voltage multiplier unit and the display; and
a switch electrically connected between the processor unit and the battery for switching on and off the gap analyzer device.

11. The gap analyzer device of any preceding Claim, consisting of:
a casing;
a housing formed inside the casing and configured to receive a rechargeable battery;
a voltage multiplier unit provided inside the casing and configured to be connected to the rechargeable battery and to increase a voltage of the rechargeable battery to a predetermined value;
a voltage stabilization unit provided inside the casing and connected to the voltage multiplier unit and configured to stabilize the voltage having the predetermined value;
an output port attached to the casing and connected to the voltage stabilization unit and configured to output the voltage having the predetermined value to a probe;
an input port attached to the casing and configured to receive from the probe a signal indicative of the gap of the turbo-machine;
a processor unit provided inside the casing and connected to the input port and configured to determine a voltage associated with the signal;
a display attached to the casing and connected to the processor unit and configured to display the determined voltage;
a common port attached to the casing and connected to the voltage stabilization unit, the voltage multiplier unit and the processor unit;
a first switch electrically connecting the output port to the rechargeable battery and configured to be directly pressed by a user, the first switch being provided on an outside of the casing;
a second switch electrically connecting the display to another battery and configured to be directly pressed by the user, the second switch being provided on the outside of the casing; and
a third switch electrically connecting the rechargeable battery to the processing unit for testing the rechargeable battery and configured to be directly pressed by the user, the third switch being provided on the outside of the casing.

12. The gap analyzer device of any preceding Claim, consisting of
a casing;
a voltage multiplier unit configured to be connected to a rechargeable battery and to increase a voltage of the rechargeable battery to a predetermined value;
a voltage stabilization unit connected to the voltage multiplier unit and configured to stabilize the voltage having the predetermined value;
an output port connected to the voltage stabilization unit and configured to output the voltage having the predetermined value;
an input port configured to receive a signal indicative of the gap of the turbo-machine;
a processor unit connected to the input port and configured to calculate a voltage associated with the signal;
a display connected to the processor unit and configured to display only the calculated voltage;
a common port connected to the voltage stabilization unit, the voltage multiplier unit and the processor unit;
a first switch electrically connecting the output port to the rechargeable battery and configured to be directly pressed by a user, the first switch being provided on an outside of the casing;
a second switch electrically connecting the display to another battery and configured to be directly pressed by the user, the second switch being provided on the outside of the casing;
a third switch electrically connecting the rechargeable battery to a processor for testing the rechargeable battery and configured to be directly pressed by the user, the third switch being provided on the outside of the casing;
a first visual indicator provided on the outside of the casing and configured to light when the replacement battery is discharged; and
a second visual indicator provided on the outside of the casing and configured to light when the replacement battery is charged.

13. A method for measuring with a gap analyzer device a gap in a turbo-machine, the method comprising:
pressing a first switch to turn on the gap analyzer device;
pressing a second switch to determine whether a light indicator indicates that a rechargeable battery is operational;
contacting output and input ports of the gap analyzer device to a probe;
pressing a third switch on the gap analyzer device for sending a voltage to the probe and for receiving from the probe a signal indicative of the gap; and
displaying on a display of the gap analyzer device a voltage associated with the gap.

14. The method of Claim 13, consisting of:
pressing a first switch to turn on the gap analyzer device;
pressing a second switch to determine whether a light indicator indicates that a rechargeable battery is operational;
contacting output and input ports of the gap analyzer device to a probe;
pressing a third switch on the gap analyzer device for sending a voltage to the probe and for receiving from the probe a signal indicative of the gap; and
displaying on a display of the gap analyzer device a voltage associated with the gap.
